# EUROPÄISCHE PATENTSCHRIFT

(11) **EP 0 644 516 B1**
(45) Veröffentlichungstag und Bekanntmachung des Hinweises auf die Patenterteilung: **12.07.2000**
(21) Anmeldenummer: 94112278.0
(22) Anmeldetag: 05.08.1994
(51) Int. Cl.: G08G 1/052

(54) **Verfahren und Einrichtung zur bidirektionalen Übertragung von Datensignalen**
Method and device for bidirectional transmission of data signals
Procédé et dispositif de transmission bidirectionnelle de signaux de données

(30) Priorität: 15.09.1993 DE 4331286
(43) Veröffentlichungstag der Anmeldung: 22.03.1995
(73) Patentinhaber: ROBERT BOSCH GMBH, 70442 Stuttgart (DE)
(72) Erfinder: Grabow, Wilhelm, Dr. Dipl.-Ing., D-31171 Nordstemmen (DE); Holze, Harald, CH-1024 Ecublens (CH)

(56) Entgegenhaltungen:
- ADVANCED TELEMATICS IN ROAD TRANSPORT. PROCEEDINGS OF THE DRIVE CONFERENCE, 4-6 FEBR. 1991, BRUSSELS, BE, Bd. 1, 1.Januar 1991, Seiten 248-268, XP000443997 BLYTHE P T ET AL: "A SHORT-RANGE ROAD TO VEHICLE MICROWAVE COMMUNICATIONS LINK FOR AUTOMATIC DEBITING AND OTHER RTI SERVICES"

## Beschreibung

Die Erfindung betrifft ein Verfahren zur bidirektionalen Übertragung von Datensignalen zwischen einer feststehenden Einrichtung und einer Fahrzeugeinrichtung, bei dem die feststehende Einrichtung ein Signal einer vorgegebenen Frequenz aussendet, die Fahrzeugeinrichtung das ausgesandte Signal, insbesondere nach dem semi-passiven Transponderprinzip, mit wenigstens einer Modulationsfrequenz mit Daten moduliert zurücksendet und die feststehende Einrichtung das zurückgesandte Signal empfängt und zur Ermittlung der übersandten Daten auswertet. Die Erfindung betrifft ferner eine feststehende Einrichtung zur Durchführung des Verfahrens.

Durch die Veröffentlichung Proceedings of the Drive Conference "Advanced Telematics in Road Transport", 1991, Vol. 1, ist im Rahmen des PAMELA-Projekts vorgeschlagen worden, einen Datenaustausch im Mikrowellenbereich zwischen einer Bake am Rande einer Fahrstraße und einem Fahrzeug mit einem aktiven und einem semi-passiven Transponder durchzuführen. Dabei werden Daten von einem Bakengerät zum Sende- und Empfangsteil des Fahrzeuggeräts im sogenannten Downlink mittels amplitudenmodulierter Signale übertragen. Die Datenübertragung vom Fahrzeug zur Bake erfolgt im Uplink-Betrieb nach dem Transponder-Prinzip. Dabei sendet die Bake ein unmoduliertes Trägersignal, das vom Fahrzeuggerät empfangen wird. Dieses empfangene Signal wird mit den auszusendenden Daten moduliert und wieder vom Bakengerät empfangen.

Es ist bekannt, die von der Bake wieder empfangenen Signale mit einem Einseitenbandmischer (Image Rejection Mixer) in das Basisband herabzumischen und ggf. nur ein Seitenband zur Ermittlung der vom Fahrzeug übersandten Daten auszuwerten.

Die Datenkommunikation zwischen dem Fahrzeug und der feststehenden Einrichtung kann zur Sammlung relevanter Daten für eine Verkehrslenkung, zur Angabe empfohlener Fahrtrouten, zur Abbuchung von Benutzungsgebühren usw. benutzt werden.

Für viele Anwendungszwecke ist es sinnvoll, eine Information über die Geschwindigkeit der Fahrzeuge zu erhalten. Für ein umfassendes Verkehrsmanagement ist es sinnvoll, festzustellen, ob der Verkehr flüssig ist oder ob sich die Fahrzeuge im Stau befinden. Für die Durchführung der Kommunikation an einer Bake mit verschiedenen Fahrzeugen kann es sinnvoll sein, aufgrund der festgestellten Geschwindigkeit die Prioritäten für die Abarbeitung der Kommunikation mit den Fahrzeugen festzulegen, um für jedes Fahrzeug eine ausreichende Kommunikationszeit zur Verfügung zu haben. Wird für die Durchführung der Kommunikation eine elektrisch gesteuerte Antenne verwendet, deren Ausrichtung dem bewegten Fahrzeug nachgeführt wird, kann die Geschwindigkeitsinformation für den Nachführmechanismus verwendet werden. Schließlich kann die Geschwindigkeitsinformation mit Straßenzustandsinformationen korreliert werden und bei Feststellung einer überhöhten Geschwindigkeit ggf. eine Warnung an das Fahrzeug übermittelt werden.

Es ist bekannt, die Geschwindigkeit von Fahrzeugen durch Radar, Lichtschranken oder in die Straße eingelassene Induktionsschleifen zu messen. In allen Fällen verhindert der damit erforderliche hohe Aufwand eine Massenermittlung der Fahrzeuggeschwindigkeiten.

Ausgehend von der Problemstellung, die Geschwindigkeit von Fahrzeugen an Verkehrsüberwachungsstationen mit einfacheren Mitteln festzustellen, ist das eingangs erwähnte Verfahren erfindungsgemäß dadurch gekennzeichnet, daß die empfangenen Modulationsfrequenzen in beiden Seitenbändern in Relation zu der vorgegebenen Frequenz des ursprünglich ausgesandten Signals gebracht werden und aus der Frequenzdifferenz der zugehörigen Modulationsfrequenzen in beiden Seitenbändern eine Geschwindigkeitsinformation für das betreffende Fahrzeug hergeleitet wird.

Die Erfindung beruht auf der Erkenntnis, daß das von der feststehenden Einrichtung ausgesandte Signal mit der vorgegebenen Frequenz vom Fahrzeug um die Dopplerfrequenz verschoben empfangen wird. Die Übertragung der durch das Fahrzeuggerät modulierten Frequenzen auf die feststehende Einrichtung führt zu einer weiteren Dopplerverschiebung. Diese Verschiebung bewirkt, daß der Abstand der Modulationsfrequenzen von der ursprünglich ausgesandten Frequenz in einem Seitenband geringer ist als in dem anderen Seitenband. Dieser Unterschied wird erfindungsgemäß gemessen und als die Fahrzeuggeschwindigkeit repräsentierenden Meßwert verwendet. Da die Frequenzen in beiden Seitenbändern jeweils um zweimal die Dopplerfrequenz verschoben sind und die Verschiebung in einem Seitenband von der ursprünglichen vorgegebenen Frequenz weg und in dem anderen Seitenband zu dieser Frequenz hin erfolgt, unterscheiden sich die Abstände der Modulationsfrequenzen im oberen und unteren Seitenband zur ursprünglichen vorgegebenen Frequenz um viermal die Dopplerfrequenz. Im Unterschied zu den aufwendigen Radarverfahren, bei denen als Meßsignal immer nur ein Frequenzunterschied in der Größe der doppelten Dopplerfrequenz zur Verfügung steht, wird daher durch das erfindungsgemäße Verfahren nicht nur ein erheblicher Aufwand eingespart sondern auch eine größere Meßempfindlichkeit erzielt. Diese kann zur Erhöhung der Meßgenauigkeit oder zur Verringerung der Meßzeit verwendet werden.

Vorzugsweise werden die empfangenen Modulationsfrequenzen in das Basisband heruntergemischt und es wird eine Frequenzdifferenz zwischen den heruntergemischten Modulationsfrequenzen festgestellt.

In einer bevorzugten, einfach zu realisierenden Ausführungsform der Erfindung werden zur Wertung der Unterschiede der Frequenzabstände des unteren und des oberen Seitenbandes Impulse aus Signalen im oberen und unteren Seitenband gezählt. Dabei ist es zweckmäßig, wenn bei Erreichen eines vorgegebenen Zählwertes in einem Seitenband eine Zeitmeßeinrichtung gestartet und bei Erreichen des vorgegebenen Zielwerts in dem anderen Seitenband die Zeitmeßeinrichtung gestoppt wird. Die gemessene Zeit kann dann mit der Geschwindigkeit des Fahrzeugs durch eine dem Fachmann geläufige Umrechnung korreliert werden.

Eine feststehende Einrichtung zur Durchführung des erfindungsgemäßen Verfahrens mit einer Sendeeinrichtung für ein Signal mit vorgegebener Frequenz, einer Empfangseinrichtung zum Empfang eines Antwortsignals, das durch Modulation des ausgesandten Signals mit wenigstens einer Frequenz zur Übertragung von Daten gebildet ist, einer Mischeinrichtung und einer Auswertungseinrichtung zur Ermittlung der übersandten Daten ist erfindungsgemäß dadurch gekennzeichnet, daß in der Mischeinrichtung beide Seitenbänder des von der Empfangseinrichtung empfangenen Signals unter Verwendung der vorgegebenen Frequenz des ursprünglich ausgesandten Signals gemischt werden und daß die Auswertungseinrichtung eine Einrichtung zur Feststellung einer Frequenzdifferenz zwischen den Signalen der beiden Seitenbänder aufweist. Dabei ist die Mischeinrichtung zweckmäßigerweise ein Einseitenband-Mischer an dessen Ausgängen die in das Basisband heruntergemischten Modulationsfrequenzen für die beiden Seitenbänder gesondert anstehen.

Vorzugsweise weist die Einrichtung zur Feststellung des Unterschieds Zähleinrichtungen für Impulse aus den Signalen in beiden Seitenbändern auf.

In einer bevorzugten Ausführungsform sind die Zähleinrichtungen durch Nulldurchgangsdetektoren mit angeschlossenen Zählern gebildet. Dabei erzeugt zweckmäßigerweise ein Impulserzeuger einen Steuerimpuls beim Erreichen eines vorgegebenen Zählerstands durch den Zähler. Der Impulserzeuger kann dabei ein Vergleicher sein, dessen einem Eingang der Zählerstand des Zählers und dessen anderem Eingang ein Referenzsignal zuführbar ist. Durch die für beide Seitenbänder erzeugten Steuerimpulse kann dann eine Zeitmeßeinrichtung ein- bzw. ausschaltbar sein. An diese Zeitmeßeinrichtung ist zweckmäßigerweise eine Recheneinrichtung zur Umrechnung der gemessenen Zeit in die Fahrzeuggeschwindigkeit anschließbar.

Die Erfindung wird im folgenden anhand eines in der Zeichnung dargestellten Ausführungsbeispiels näher erläutert. Es zeigen:
- Figur 1: - eine schematische Darstellung der Datenkommunikation zwischen einer Bake als feststehende Einrichtung und einem Fahrzeug
- Figur 2: - eine schematische Darstellung zur Erläuterung der im Zeitmultiplex ablaufenden Kommunikation
- Figur 3: - Funktionsblockschaltbilder für die Sende-/Empfangseinrichtung der Bake und der Sende-/Empfangseinrichtung des Fahrzeugs
- Figur 4: - Frequenzspektren zur Erläuterung der an verschiedenen Stellen der Anordnung gemäß Figur 3 auftretenden Signale
- Figur 5: - ein Blockschaltbild für eine Einrichtung zur Ermittlung der Geschwindigkeit in der Bake

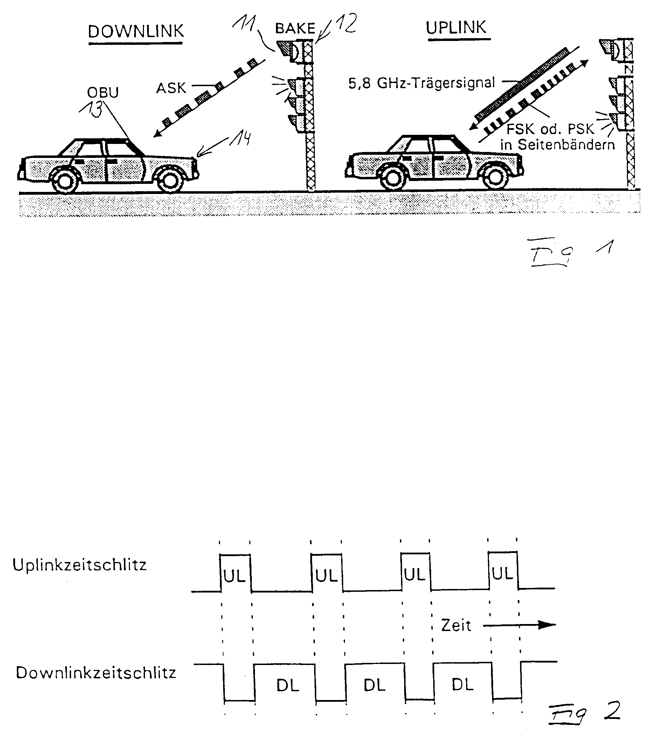

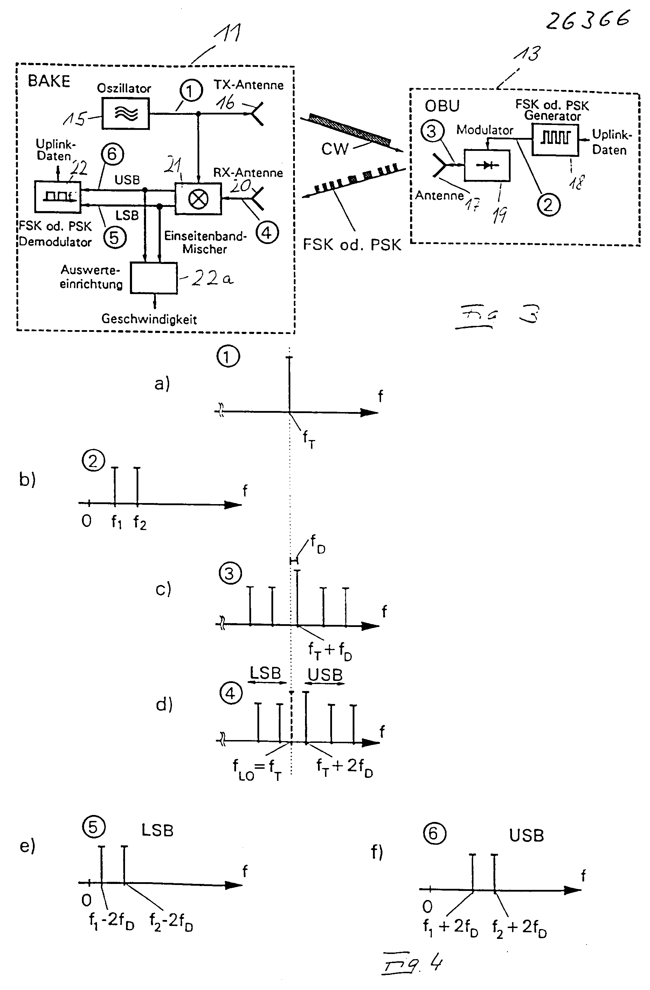

Die Figuren 1 und 2 erläutern die Kommunikation zwischen einer Sende- und Empfangseinrichtung 11 einer Bake 12 und einem Fahrzeuggerät 13 eines Fahrzeugs 14.

Die Kommunikation findet in zeitlich einander abwechselnden Phasen, dem Downlink und dem Uplink statt. Figur 2 verdeutlicht das Abwechseln von Uplink UL und Downlink DL, wobei hier für die Downlink-Phase jeweils eine längere Zeit als für die Uplink-Phase zur Verfügung steht.

Beim Downlink werden von dem Sende- und Empfangsgerät 11 der Bake 12 Daten an das Fahrzeuggerät 13 übermittelt. Die Datenübermittlung erfolgt durch eine Amplitudenmodulation (Amplitude Shift Keying - ASK), ist an sich bekannt und muß hier nicht näher erläutert werden.

In der Uplink-Phase sendet das Sende- und Empfangsgerät 11 ein Signal konstanter Amplitude in einer vorgegebenen festen Frequenz aus. Gemäß den derzeitigen Normungsbestrebungen wird dieses Signal eine Frequenz von ca. 5,8 GHz haben. Dieses Signal wird von dem Fahrzeuggerät 13 empfangen und nach dem semipassiven Transponder-Prinzip mit den zurückzusendenden Daten moduliert. Diese Datenmodulation erfolgt in Seitenbändern des Trägers als Frequenzmodulation (Frequency Shift Keying - FSK) oder als Phasenmodulation (Phase Shift Keying PSK). Das so modulierte Signal wird vom Sende- und Empfangsgerät 11 der Bake 12 wieder empfangen. Zur Ermittlung der vom Fahrzeug 14 übersandten Daten wird das empfangene Signal im Sende- und Empfangsgerät 11 ausgewertet.

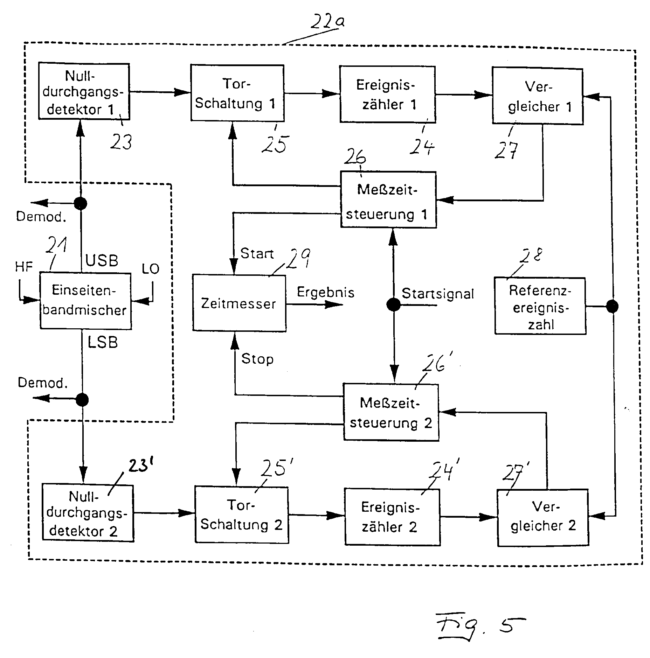

Figur 3 und 4 verdeutlichen diese Kommunikation für die Uplink-Phase.

In dieser Phase erzeugt ein Oszillator 15 ein konstantes Ausgangssignal einer vorgegebenen Frequenz f_{T}, dessen Frequenzspektrum 1 in Figur 4 a dargestellt ist. Dieses Ausgangssignal gelangt auf eine Sendeantenne 16, die das Signal mit der vorgegebenen festen Frequenz f_{T} als kontinuierliches Signal (CW) abstrahlt. Dieses Signal wird von einer Sende-/Empfangsantenne 17 des Fahrzeuggeräts 13 empfangen. Aufgrund der Bewegung des Fahrzeugs 14 hat das von der Antenne 17 empfangene Signal nicht mehr die Frequenz f_{T}, sondern eine um die Dopplerfrequenz verschobene Frequenz f_{T} + f_{D}.

Das Fahrzeuggerät 13 enthält in einem Speicher abgelegte Daten, die während der Uplink-Phase auf die Bake 12 übertragen werden sollen. Entsprechend diesen Daten wird ein Phasen- oder Frequenzmodulationsgenerator 18 gesteuert, der Modulations-Steuersignale für einen Modulator 19 erzeugt. In dem in Figur 4 dargestellten Ausführungsbeispiel findet eine Frequenzmodulation mit zwei Shift-Frequenzen f₁, f₂ statt, deren Frequenzspektrum 2 in Figur 4 b gezeigt ist. Am Ausgang des Modulators 19 steht nunmehr das modulierte Signal an, das aus der empfangenen Trägerfrequenz f_{T} + f_{D} sowie den symmetrisch dazu angeordneten Shift-Frequenzen in beiden Seitenbändern besteht, wie dies das Frequenzspektrum 3 in Figur 4 c zeigt. Das so modulierte Signal wird von der Sende-/Empfangsantenne 17 abgestrahlt und von einer Empfangsantenne 20 des Geräts 11 empfangen. Da auch während dieser Übertragung das Fahrzeug 14 relativ zur Bake 12 bewegt wird, wird das Frequenzspektrum 3 insgesamt dopplerverschoben und als Frequenzspektrum 4, das in Figur 4 d dargestellt ist, von der Empfangsantenne 20 empfangen.

Mit einem Einseitenbandmischer 21 wird das empfangene Frequenzspektrum 4 mit der ursprünglichen Sendefrequenz f_{T} gemischt. Durch diesen Mischvorgang entstehen für das untere Seitenband LSB die Frequenzen f₁-2f_{D} und f₂-2f_{D} (Figur 4 e), für das obere Seitenband USB hingegen die Frequenzen f₁+2f_{D} und f₂+2f_{D}. Der Unterschied zwischen den heruntergemischten Frequenzen des unteren Seitenbandes und des oberen Seitenbandes beträgt somit jeweils 4 f_{D}.

Zur Gewinnung der übermittelten Daten ist in dem Gerät 11 ein Demodulator 22 vorgesehen, an dessen Ausgang die übersandten Daten abnehmbar sind.

Figur 5 zeigt ein Ausführungsbeispiel für die Auswertung des Unterschieds zwischen den heruntergemischten Frequenzen des unteren Seitenbands LSB und des oberen Seitenbandes USB.

Dem Einseitenbandmischer 21 wird - wie bereits in Figur 3 verdeutlicht - das durch die Empfangsantenne 20 empfangene Hochfrequenzsignal HF einerseits und das Ausgangssignal LO des Oszillators 15 andererseits zugeführt. Die heruntergemischen Signale für das untere Seitenband LSB und das obere Seitenband USB gelangen auf jeweils einen Nulldurchgangsdetektor 23, 23'.

Zwischen dem Nulldurchgangsdetektor 23, 23' und einem die Nulldurchgänge zählenden Zähler 24, 24' ist eine Torschaltung 25, 25' geschaltet. Diese wird von einer Meßzeitsteuerung 26, 26' gesteuert. Diese erhält ein Startsignal, das aus der Kommunikationssteuerung, wie sie in Figur 2 dargestellt ist, abgeleitet wird. Durch die Meßzeitsteuerung 26, 26' kann ferner erreicht werden, daß ausschließlich Nulldurchgänge zum Zähler 24, 24' weitergeleitet werden, die jeweils innerhalb eines schmalen Zeitschlitzes liegen, wobei sich die Abstände der Zeitschlitze aus den bekannten Shift-Frequenzen f₁, f₂ ergeben. Dadurch wird eine Störunterdrückung für außerhalb dieser Zeitschlitze liegende Störsignale möglich.

Die Nulldurchgänge der Datensignale, die naturgemäß im oberen Seitenband USB und unteren Seitenband LSB identisch sind, werden durch die Zähler 24, 24' gezählt. Der Zählerstand der Zähler 24, 24' gelangt auf einen Vergleicher 27, 27', dessen anderem Eingang eine Referenzzahl aus einem Referenzzahlgenerator 28 zuführbar ist.

Bewegt sich das Fahrzeug 14 während der Datenkommunikation auf die Bake 12 zu, sind die Frequenzen im oberen Seitenband USB etwas höher als im unteren Seitenband LSB. In diesem Fall wird der Zähler 24 die Referenzzahl eher erreichen als der Zähler 24', der die Nulldurchgänge im unteren Seitenband LSB zählt. Bei Erreichen der Referenzzahl erzeugt der Vergleicher 27, 27' einen Ausgangsimpuls, der über die Meßzeitsteuerung 26, 26' als Steuersignal für eine Zeitmeßeinrichtung 29 weitergeleitet wird. Der Steuerimpuls des Vergleichers 27 dient dabei als Startsignal für die Zeitmeßeinrichtung 29, während der Steuerimpuls des Vergleichers 27' die Zeitmeßeinrichtung stoppt.

Die von der Zeitmeßeinrichtung 29 gemessene Zeit, die den Zeitunterschied für das Erreichen des vorgegebenen Referenz-Zählerstandes repräsentiert, ist ein Maß für die Geschwindigkeit des Fahrzeugs 14.

Die in Figur 5 dargestellte Schaltung läßt sich mit einfachen digitalen Bausteinen erstellen und eignet sich für eine Integration zu einem IC.

## Patentansprüche

1. Verfahren zur bidirektionalen Übertragung von Datensignalen zwischen einer feststehenden Einrichtung (11) und einer Fahrzeugeinrichtung (13), bei dem die feststehende Einrichtung (11) ein Signal einer vorgegebenen Frequenz (f_{T}) aussendet, die Fahrzeugeinrichtung (13) das ausgesandte Signal, insbesondere nach dem semi-passiven Transponder-Prinzip, mit wenigstens einer Modulationsfrequenz (f₁, f₂) mit Daten moduliert zurücksendet und die feststehende Einrichtung (11) das zurückgesandte Signal empfängt und zur Ermittlung der übersandten Daten auswertet, **dadurch gekennzeichnet, daß** die empfangenen Modulationsfrequenzen in beiden Seitenbändern (USB, LSB) in Relation zu der vorgegebenen Frequenz (f_{T}) des ursprünglich ausgesandten Signals gebracht werden und aus Frequenzdifferenzen der zugehörigen Modulationsfrequenzen in beiden Seitenbändern (USB, LSB) eine Geschwindigkeitsinformation für das betreffende Fahrzeug (14) hergeleitet wird.

2. Verfahren nach Anspruch 1, dadurch gekennzeichnet, daß die empfangenen Modulationsfrequenzen (f₁, f₂) in das Basisband heruntergemischt werden und daß eine Frequenzdifferenz zwischen den heruntergemischten Modulationsfrequenzen (f₁, f₂) festgestellt wird.

3. Verfahren nach Anspruch 1 oder 2, dadurch gekennzeichnet, daß zur Auswertung der Frequenzdifferenz Impulse aus Signalen im oberen und unteren Seitenband (USB, LSB) gezählt werden.

4. Verfahren nach Anspruch 3, dadurch gekennzeichnet, daß bei Erreichen eines vorgegebenen Zählwerts in einem Seitenband (USB) eine Zeitmeßeinrichtung (29) gestartet und bei Erreichen des vorgegebenen Zählwerts in dem anderen Seitenband (LSB) die Zeitmeßeinrichtung (29) gestoppt wird und daß die gemessene Zeit mit der Geschwindigkeit des Fahrzeugs korreliert wird.

5. Feststehende Einrichtung zur Durchführung des Verfahrens nach einem der Ansprüche 1 bis 4 mit einer Sendeeinrichtung (15, 16) für ein Signal mit einer vorgegebenen Frequenz (f_{T}), einer Empfangseinrichtung (20) zum Empfang eines Antwortsignals, das durch Modulation des ausgesandten Signals mit wenigstens einer Frequenz zur Übermittlung von Daten gebildet ist, einer Mischeinrichtung (21) und einer Auswertungseinrichtung (22) zur Ermittlung der übersandten Daten, dadurch gekennzeichnet, daß in der Mischeinrichtung (21) beide Seitenbänder (USB, LSB) des von der Empfangseinrichtung (20) empfangenen Signals unter Verwendung der vorgegebenen Frequenz (f_{T}) des ursprünglich ausgesandten Signals gemischt demoduliert werden und daß die Auswertungseinrichtung eine Einrichtung (22a) zur Feststellung einer Frequenzdifferenz zwischen den Signalen der beiden Seitenbänder aufweist.

6. Einrichtung nach Anspruch 5, dadurch gekennzeichnet, daß die Mischeinrichtung ein Einseitenband-Mischer (21) ist, an dessen Ausgängen die in das Basisband heruntergemischten Modulationsfrequenzen (f₁, f₂) für beide Seitenbänder gesondert anstehen.

7. Einrichtung nach Anspruch 5 oder 6, dadurch gekennzeichnet, daß die Einrichtung zur Feststellung des Unterschieds Zähleinrichtungen für Impulse aus den Signalen in beiden Seitenbändern (USB, LSB) aufweist.

8. Einrichtung nach Anspruch 7, dadurch gekennzeichnet, daß die Zähleinrichtungen durch Nulldurchgangsdetektoren (23, 23') mit angeschlossenen Zählern (24, 24') gebildet sind.

9. Einrichtung nach Anspruch 7 oder 8, gekennzeichnet durch einen Impulserzeuger (27) zur Erzeugung eines Steuerimpulses beim Erreichen eines vorgegebenen Zählerstands durch die Zähleinrichtung.

10. Einrichtung nach Anspruch 9, dadurch gekennzeichnet, daß der Impulserzeuger ein Vergleicher (27, 27') ist, dessen einem Eingang der Zählerstand der Zähleinrichtung und dessen anderem Eingang ein Referenzsignal zuführbar ist.

11. Einrichtung nach Anspruch 9 oder 10, dadurch gekennzeichnet, daß mit dem für beide Seitenbänder (USB, LSB) erzeugten Steuerimpulsen eine Zeitmeßeinrichtung (29) ein- bzw. ausschaltbar ist.

12. Einrichtung nach Anspruch 11, gekennzeichnet durch eine an die Zeitmeßeinrichtung (29) angeschlossene Recheneinrichtung zur Umrechnung der gemessenen Zeit in die Fahrzeuggeschwindigkeit.

## Claims

1. Method for the bidirectional transmission of data signals between a stationary device (11) and a vehicle device (13), in which the stationary device (11) sends out a signal of a predetermined frequency (f_{T}), the vehicle device (13) sends back the signal sent out, particularly in accordance with the semipassive transponder principle, modulated with data with at least one modulation frequency (f₁, f₂) and the stationary device (11) receives the signal sent back and evaluates it for determining the transmitted data, characterized in that the received modulation frequencies in both sidebands (USB, LSB) are brought into relation with the predetermined frequency (f_{T}) of the signal originally sent out and a speed information for the relevant vehicle (14) is derived from frequency differences of the associated modulation frequencies in both sidebands (USB, LSB).

2. Method according to Claim 1, characterized in that the received modulation frequencies (f₁, f₂) are converted down into the baseband and in that a frequency difference between the down-converted modulation frequencies (f₁, f₂) is determined.

3. Method according to Claim 1 or 2, characterized in that pulses from signals in the upper and lower sideband (USB, LSB) are counted for evaluating the frequency difference.

4. Method according to Claim 3, characterized in that when a predetermined count is reached in one sideband (USB), a timer (29) is started and when the predetermined count is reached in the other sideband (LSB), the timer (29) is stopped and in that the measured time is correlated with the speed of the vehicle.

5. Stationary device for carrying out the method according to one of Claims 1 to 4 comprising a transmitting device (15, 16) for a signal with a predetermined frequency (f_{T}), a receiving device (20) for receiving a response signal which is formed by modulation of the signal sent out with at least one frequency for transmitting data, a mixing device (21) and an evaluating device (22) for determining the transmitted data, characterized in that, in the mixing device (21), both sidebands (USB, LSB) of the signal received by the receiving device (20) are demodulated mixed by using the predetermined frequency (f_{T}) of the signal originally sent out, and in that the evaluating device exhibits a device (22a) for determining a frequency difference between the signals of the two sidebands.

6. Device according to Claim 5, characterized in that the mixing device is a single-sideband mixer (21), at the outputs of which the modulation frequencies (f₁, f₂) converted down into the baseband are present separately for both sidebands.

7. Device according to Claim 5 or 6, characterized in that the device for determining the difference exhibits counting devices for pulses from the signals in both sidebands (USB, LSB).

8. Device according to Claim 7, characterized in that the counting devices are formed by zero-crossing detectors (23, 23') with connected counters (24, 24').

9. Device according to Claim 7 or 8, characterized by a pulse generator (27) for generating a control pulse when a predetermined count is reached by the counting device.

10. Device according to Claim 9, characterized in that the pulse generator is a comparator (27, 27'), one input of which can be supplied with the count of the counting device and the other input of which can be supplied with a reference signal.

11. Device according to Claim 9 or 10, characterized in that the control pulses generated for both sidebands (USB, LSB) can be used for switching a timer (29) on or, respectively, off.

12. Device according to Claim 11, characterized by a computing device, connected to the timer (29), for converting the measured time into the vehicle speed.

## Revendications

1. Procédé de transmission bidirectionnelle de signaux de données entre une installation fixe (11) et une installation (13) embarquée dans un véhicule, procédé selon lequel
- l'installation fixe (11) émet un signal de fréquence prédéterminée (f_{T}),
- l'installation (13) embarquée dans le véhicule émet en retour, en travaillant notamment selon le principe du transpondeur semi-passif, des données modulées selon au moins une fréquence de modulation (f₁, f₂) et,
- l'installation fixe (11) reçoit le signal renvoyé et l'exploite pour déterminer les données transmises,
caractérisé en ce que
- les fréquences de modulation reçues dans les deux bandes latérales (USB, LSB) sont mises en relation avec la fréquence prédéterminée (f_{T}) du signal émis à l'origine et
- à partir des différences de fréquence de modulation correspondantes dans les deux bandes latérales (USB, LSB), on déduit une information de vitesse pour le véhicule concerné (14).

2. Procédé selon la revendication 1,
caractérisé en ce que
- les fréquences de modulation reçues (f₁, f₂) sont mélangées dans le sens décroissant dans la bande de base et
- on détermine une différence de fréquences entre les fréquences de modulation mélangées dans le sens décroissant (f₁, f₂).

3. Procédé selon la revendication 1 ou 2,
caractérisé en ce que pour exploiter la différence de fréquences, on compte les impulsions des signaux de la bande latérale supérieure et de la bande latérale inférieure (USB, LSB).

4. Procédé selon la revendication 3,
caractérisé en ce que
- lorsqu'on atteint un état de comptage prédéterminé dans une bande latérale (USB), on démarre une installation de mesure de temps (29) et lorsqu'on atteint l'état de comptage prédéterminé dans l'autre bande latérale (LSB), on arrête l'installation de mesure de temps (29) et
- on met le temps mesuré en corrélation avec la vitesse du véhicule.

5. Installation fixe pour la mise en oeuvre du procédé selon l'une des revendications 1 à 4 comportant une installation d'émission (15, 16) pour un signal de fréquence prédéterminée (f_{T}), une installation de réception (20) pour recevoir un signal de réponse formé par modulation du signal émis avec au moins une fréquence pour transmettre les données, une installation de mélange (21) et une installation d'exploitation (22) pour déterminer les données transmises,
caractérisée en ce que
- l'installation de mélange (21) démodule de manière mélangée les deux bandes latérales (USB, LSB) du signal reçu par l'installation de réception (20) en utilisant la fréquence prédéterminée (f_{T}) du signal émis à l'origine et,
- l'installation d'exploitation comporte une installation (22a) pour constater une différence de fréquence entre les signaux des deux bandes latérales.

6. Installation selon la revendication 5,
caractérisée en ce que
l'installation de mélange est un mélangeur à bande latérale unique (21) dont les sorties fournissent les fréquences de modulation (f₁, f₂), mélangées dans le sens décroissant dans la bande de base, de manière séparée pour les deux bandes latérales.

7. Installation selon la revendication 5 ou 6,
caractérisée en ce que
l'installation pour déterminer la différence comporte des installations de comptage des impulsions des signaux des deux bandes latérales (USB, LSB).

8. Installation selon la revendication 7,
caractérisée en ce que
les installations de comptage sont formées par des détecteurs de passage par zéro (23, 23') auxquels sont reliés les compteurs (24, 24').

9. Installation selon les revendications 7 ou 8,
caractérisée
par un générateur d'impulsions (27) qui génère une impulsion de commande lorsqu'il atteint un état de comptage prédéterminé par l'installation de comptage.

10. Installation selon la revendication 9,
caractérisée en ce que
le générateur d'impulsions est un comparateur (27, 27') dont une entrée reçoit l'état de comptage de l'installation de comptage et dont l'autre entrée reçoit un signal de référence.

11. Installation selon les revendications 9 ou 10,
caractérisée en ce qu'
une installation de mesure de temps (29) peut être activée ou désactivée par les impulsions de commande générées par les deux bandes latérales (USB, LSB).

12. Installation selon la revendication 11,
caractérisée par
une installation de calcul reliée à l'installation de mesure de temps (29) pour convertir le temps mesuré en la vitesse du véhicule.
